# EUROPEAN PATENT APPLICATION

(11) **EP 1 014 613 A2**
(43) Date of publication of application: **28.06.2000**
(21) Application number: 99309206.3
(22) Date of filing: 18.11.1999
(51) Int. Cl.: H04J 14/02

(54) **Shared optical protection in an optical communications network**

(30) Priority: 23.12.1998 US 219006
(71) Applicant: NORTEL NETWORKS CORPORATION, Montreal, Quebec H2Y 3Y4 (CA)
(72) Inventor: Baker, Nigel, Harlow, Essex CM20 2PL (GB); Sullivan, John Patrick, Ottawa, Ontario K2C 1L5 (CA); Solheim, Alan Glen, Kanata, Ontario K2M 1C4 (CA)
(74) Representative: Ryan, John Peter William

(57) **Abstract**

In a shared optical protection scheme, a network node is arranged to provide optical protection signals to at least two protection paths to offer fault protection for a number of the channels of a wavelength division multiplexed working traffic signal supported by the node, the network node including an optical switch array which couples individual protection channels to one or other of the protection paths and which is selectively reconfigurable to reroute individual protection channels to an alternative one of the protection paths in the event of a transmission fault.

## Description

This invention relates to a wavelength division multiplexed (WDM) optical communications network and in particular, to a network in which optical protection traffic paths are provided to maintain connections between network nodes in the event of a fault in a main working traffic signal path between those nodes.

One possible way to provide a protection traffic path between nodes is, for each adjacent pair of nodes of the network, to provide an additional protection cable between the nodes which preferably follows a different path around the network to the main signal carrying fibre joining those nodes. This ensures that the protection cable is not susceptible to the same failure as the main cable. This type of dedicated protection scheme results in a large number of additional cables extending around the network, and these additional cables are normally unused. This approach is therefore expensive and inherently bandwidth inefficient.

A known improvement to this approach is a ring configuration in which adjacent network nodes are connected together by pairs of cables - a working cable and a protection cable - to provide a form of shared protection. This configuration has been considered for coupling nodes together which are each arranged to add or drop signals in standard SONET/SDH format to or from the network. The nodes facilitate electrical switching of all traffic carried by the working cable onto the protection cable. This enables a span switch (in which for one section of the network between adjacent nodes, the protection fibre is employed instead of the main fibre) or a ring switch (in which signals for communication between adjacent nodes are redirected around the other nodes in the network using the protection cables) to be implemented.

A problem with the use of existing nodes designed for handling data in SONET/SDH format to construct a network is the cost of the hardware components in the nodes. For example, the SONET/SDH architecture provides for multiplexing of signals at a number of different bit rates together onto individual carrier wavelengths to take advantage of the high data rate possible on those individual carrier wavelengths for transmission over optical fibres. However, the data rate of the tributary paths (such as Internet Protocol (IP) routers or Asynchronous Transfer Mode (ATM) switches) is approaching the line rate capability. Consequently, SONET multiplexing is no longer advantageous. The invention therefore aims to simplify the hardware required for the nodes of an optical network, whilst enabling implementation of a shared protection capability.

According to a first aspect of the present invention there is provided a network node for an optical communications network, the network node being arranged to provide optical protection signals to at least two protection paths to offer fault protection for a number of the channels of a wavelength division multiplexed working traffic signal supported by the node, and comprising an optical switch array which couples individual protection channels to one or other of the protection paths and which is selectively reconfigurable to re-route individual protection channels to an alternative one of the protection paths in the event of a transmission fault.

According to a second aspect of the present invention, a method of routing protection traffic in a network node in accordance with the first aspect of the present invention, comprises the step of selectively reconfiguring an optical switch array in the event of a detected transmission fault to couple individual protection channels to one or other of the protection paths to re-route individual protection channels on a channel by channel basis.

The present invention allows selective routing of individual channels in response to a network transmission failure. The failure may be damage to a main trunk cable, in which case all traffic which was to be directed to the damaged cable may instead be routed to a protection cable. Alternatively, the failure may be one associated with the network node and then only affect the transmission of a number of individual channels. In this case, the network node architecture enables the individual channels to be coupled to an appropriate protection path.

Preferably, the network node comprises first and second working traffic ports coupled to respective transceivers which handle a number of different possible channels of the wavelength division multiplexed working traffic signal to be carried by the network, and first and second protection traffic ports coupled to respective protection transceivers which handle protection signals for at least some of the channels, the optical switch array being arranged to couple protection signals between the protection transceivers and the first and second protection traffic ports, wherein the optical switch array is selectively reconfigurable to re-route protection signals to one of the first and second protection traffic ports on a channel-by-channel basis in the event of a detected transmission fault.

Preferably, the optical switch array comprises a number of individual optical switch networks, one for each of the protection channels supported by the transceivers associated with the first and second protection traffic ports, wherein changing the switch state of an optical switch network changes the routing of the respective protection channel within the network node.

Preferably, each of the first and second protection traffic ports is coupled to a multiplexer to multiplex optical signals output from the optical switch array for subsequent transmission and for demultiplexing optical signals received at the protection traffic port and coupling each of the individual channels to a respective optical switch network.

Preferably, an optical transponder is provided in each of the tributary paths of the multiplexer to condition optical signals.

Preferably, each of the first and second working traffic ports is coupled to a multiplexer for demultiplexing a wavelength division multiplexed working traffic signal received at the respective working traffic port into its constituent channels, wherein a transmission fault detector is associated with each of the demultiplexed channels for detecting failed reception on that channel.

Preferably, the network node further comprises a number of routing control circuits, each of which is coupled to a respective one of the optical switch networks, the routing control circuit receiving an output from a respective transmission fault detector in the event of a detected transmission fault on a particular protection channel to selectively reconfigure the associated optical switch network.

Preferably, the transmission fault detectors are optical transponders. More preferably, each optical transponder is adapted to signal other nodes in the network when a transmission fault is detected to establish a protection path for the protection channel and detect fault signals generated by other nodes in the network, the optical transponder being configured to output an appropriate signal to the routing control circuit in dependence on the fault signal.

Preferably, the network node further comprises an add/drop multiplexer coupled between the first and second working traffic ports.

According to a third aspect of the present invention, a wavelength division multiplexed optical communications network comprises at least two network nodes according to the first aspect of the present invention, adjacent network nodes being connected together by a main trunk cable for carrying working traffic and a protection cable for carrying protection traffic.

An example of the invention will now be described in detail with reference to the accompanying drawings, in which:
Figure 1 shows an optical network which may be configured in accordance with the invention;
Figure 2 shows one example of a possible data interface between a node of the network of Figure 1 and a service platform for providing information to or receiving information from the node;
Figure 3 shows one possible node architecture handling data of the type described with reference to Figure 2;
Figure 4 shows in greater detail the fault detection system in the architecture of Figure 3;
Figure 5 shows one possible switch architecture for the optical switching network used in the node of Figure 3; and,
Figures 6A to 6C show various possible switching states for the switch network of Figure 5 to implement different protection functions.

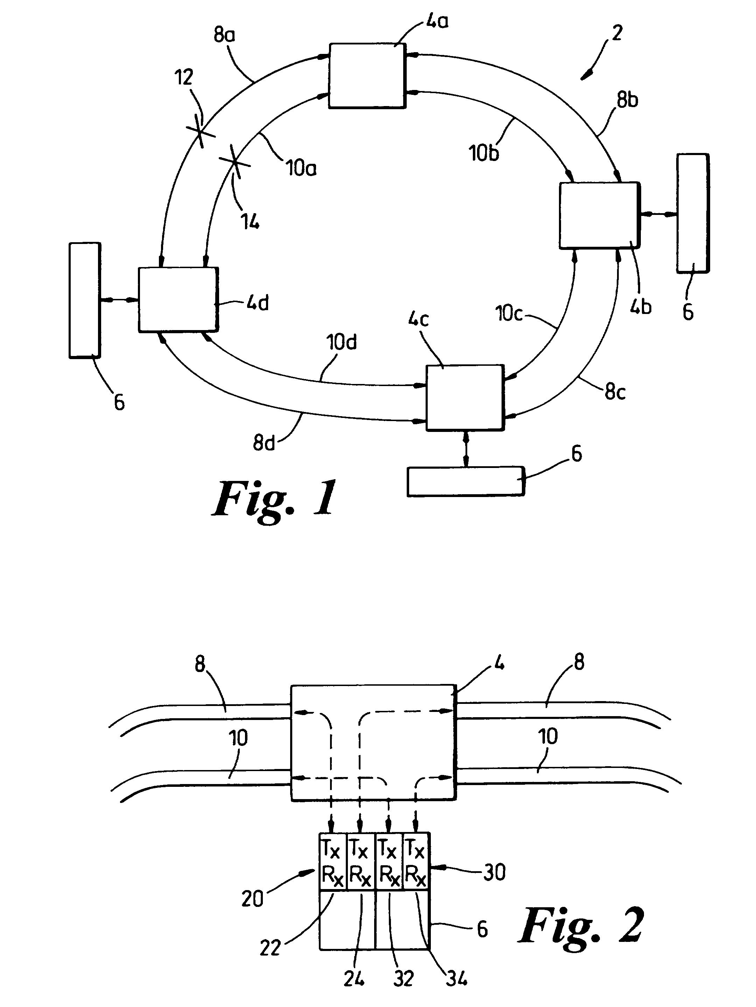

Figure 1 shows one possible network architecture having a shared protection capability, and which may be implemented using nodes operating according to the invention. In the example shown in Figure 1, the network 2 is arranged as a ring of nodes 4. Some nodes may be provided solely as repeating bays, for example node 4a, in the case of long-haul connections. Other nodes 4b, 4c, 4d are provided to enable signals from a respective service platform 6 to be introduced onto the network, or else to enable signals to be dropped to the service platform 6. The service platforms may comprise an individual device which is to communicate with the network, or may comprise an interface to additional local area networks (LANs). For example, the service platform 6 may comprise IP routers or ATM switches.

Each pair of adjacent nodes 4 is coupled together by two cables, a main cable 8 for working traffic and a protection cable 10 for protection traffic. The protection cables provide alternative optical paths for signals in the event of failure, either of a cable or of electronic components within the transmission circuitry. For example, if a main cable 8a is ruptured as indicated as 12, the network should be capable of reconfiguring so that the data for transfer between node 4a and node 4d can pass along the protection cable 10a. This re-routing implements a span switch. If the protection cable 10a also fails, as indicated at 14, the network should be able to reconfigure so that information for transfer between the nodes 4a and 4d can be directed around the protection cables 10b, 10c and 10d between the two nodes. This re-routing capability implements a ring switch.

The double-ring network architecture shown in Figure 1 is already known. The use of span switches and ring switches to enable the transfer of protected traffic is also known in this context. However, the switching of signals in the event of a detected failure conventionally involves electrical switching of the full traffic directed to a main cable onto an alternative protection cable. In the present invention, individual channels of the wavelength division multiplexed signal are switchable onto the additional optical paths provided by the protection cables, and by an optical switch array associated with each channel.

To illustrate one implementation of the invention, it will be assumed that a data interface as described with reference to Figure 2 is desired for communication between each service platform 6 and the associated network node 4. The inputs and outputs to the service platform 6 are divided into two sections. A first transceiver section 20 provides the interface for working traffic and a second transceiver section 30 provides an interface for protection traffic. The output from the service platform 6 using the first transceiver section 20 and using the second transceiver section 30 may be identical. Alternatively, the service platform 6 may designate certain data signals as requiring protection, whereas others do not. In this case, the protection signals provided as output from the second transceiver section may comprise a sub-set of the signals provided as output from the first transceiver section 20.

The first transceiver section 20 has a first transceiver 22 for sending signals to and receiving signals from the main cable 8 anticlockwise of the node, and a second transceiver 24 for sending signals to and receiving signals from the protection cable 8 clockwise of the node 4. Likewise, the second transceiver section 30 includes a first transceiver 32 for sending signals to and receiving signals from the protection cable 10 anticlockwise of the node 4, and a second transceiver 34 for sending signals to and receiving signals from the protection cable 10 clockwise of the node 4. Thus, the service platform 6 divides the data provided to the node 4 into two categories, a first category for transmission anticlockwise around the ring and a second category for transmission clockwise around the ring. This is done both for the working traffic to be provided on the main cables and for the protection traffic.

This data output of the service platform 6 is compatible with equipment compliant with the SONET/SDH standard. Therefore, the specific node architecture described in the following text enables a network to be constructed to which SONET/SDH compatible service platforms may be connected. However, it will be appreciated by those skilled in the art that other arrangements of data interface between the service platform 6 and the nodes 4 may be implemented without affecting the applicability of this invention.

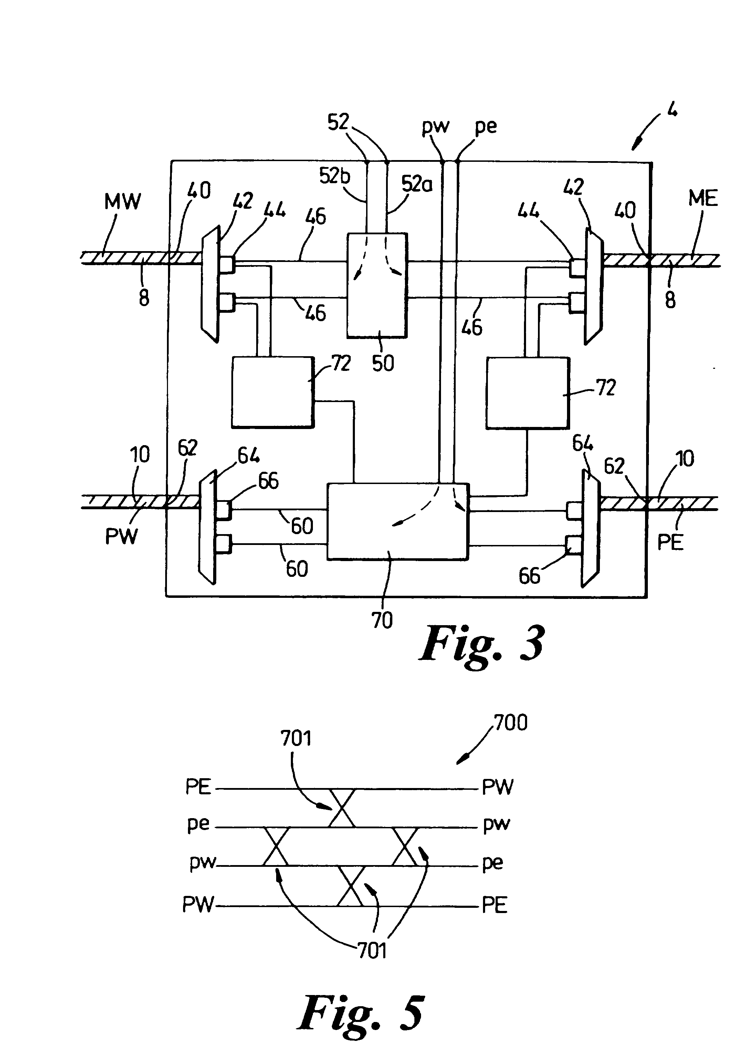

Figure 3 shows the architecture of a node enabling the network functionality described with reference to Figure 1 to be implemented, and which receives data input in the form described with reference to Figure 2.

The main trunk cables which are supplied to the node 4 are the main optical cables 8 and the protection optical cables 10. On one side of the node 4, referred to as the west side for convenience, are supplied a main west cable MW and a protection west cable PW. On the opposite side of the node 4, referred to here as the east side for convenience, enter a main east cable ME and a protection east cable PE. These four cables are bidirectional in the example shown and are each capable of carrying a wavelength division multiplexed signal comprising a number of channels, each modulated onto a respective carrier wavelength.

In so far as the main cable is concerned, the function of the node 4 is essentially to pass signals between the main cable ports 40 and to regenerate those signals. In addition, the node 4 has to provide an add/drop capability, to enable individual channels to be added to or dropped from the node 4. To achieve this, the signals from each port 40 enter a respective multiplexing circuit 42, which has the main cable 8 as one of its input and output, and has individual cables for individual channels as the other of the input and output. Although only two channels are shown per multiplexing circuit, there may in fact be 16, 32 or more such channels. In the case of signals being supplied to the main cable 8, the component 42 performs a multiplexing function, but in respect of signals received from the main cable 8, the circuit 42 performs a demultiplexing function. The signals on the demultiplexed side of each multiplexing circuit 42 are each provided to a respective transponder 44, which performs several functions as will be described in the following. The resulting individual channel signals 46 are provided to an add/drop multiplexer 50 which enables selected ones of those channels to be dropped from the node, or enables additional new channels to be introduced to the network. The structure of the add/drop multiplexer is conventional and comprises signal splitting and signal combining components. As explained with reference to Figure 2, the interface between the node 4 and the service platform 6 in respect of main traffic is by means of two ports 52, one for traffic 52a to or from the east, and one for traffic 52b to or from the west.

The transponders 44 may perform a change in the carrier frequency on which the individual channels are modulated, so that the signals are presented to the add/drop multiplexer 50 in a frequency range suitable for the components within the multiplexer 50. Any output from the add/drop multiplexer 50 also passes through a transponder 44 before being multiplexed onto the output fibre. Consequently, the carrier frequency can be changed once more to correspond to the operating characteristics of the optical fibres. This transponder also functions as a repeater, thereby regenerating the optical signal.

The function of the node with regard to the protection signals pw and pe supplied from the service platform 6 is essentially to route the protection data channel to an appropriate protection cable taking into account the fault which has occurred. The traffic on the protection cables 10 is again demultiplexed to provide the individual channels 60 of protected data. Thus, protection cable ports 62 of the node 4 are supplied to a multiplexing circuit 64 giving rise to the individual channels 60. The operation of the multiplexing circuits 64 is analogous to that of the multiplexing circuits 42 described above. Again, the demultiplexed side of each multiplexing circuit 64 is provided with a respective transponder 66 for each channel. The individual channels are then applied to an optical switch array 70, which also provides or receives the east protection signal pe and the west protection signal pw to or from the service platform 6. The optical switch array 70 comprises an optical switching network for each channel of the wavelength division multiplexed signal carried by the protection cables.

The switch array 70 performs the operation of routing the protection channels pe and pw to and from the service platform 6. In order to control the switching, control devices 72 are provided which receive data concerning any failed transmissions from those transponders 44 which receive the individual channels transmitted over the main cables 8. Fault protection is thereby performed on a channel-by-channel basis, and the fault detection data influences the control of a respective individual channel optical switching network.

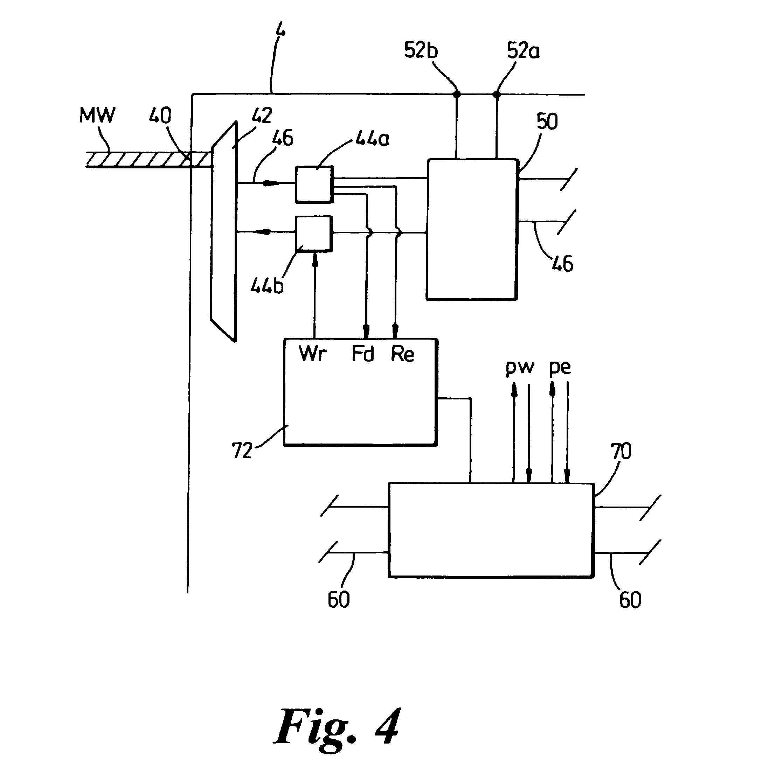

The fault detection is explained in greater detail with reference to Figure 4, in which similar components to Figure 3 are given the same references. In Figure 4 the individual channels 46 derived from the main cable MW are carried on single direction fibres (or circuits). Thus, in respect of one channel, one transponder 44a acts as a receiver from the incoming line of that channel, and another transponder 44b acts as a transmitter to the outgoing line of that channel. The receiving transponder 44a provides fault detection data Fd to the control device 72 as well as routing read data Re to the control device 72. This read data Re may comprise specifically allocated bits or bytes of the data frame structure on each channel, which are used for communicating the required state of the shared protection ring. These allocated bits or bytes may also give a general messaging capability which can pass around the network.

These allocated bits or bytes may comprise the so-called "K-bytes" defined in the SONET/SDH frame structure or emulate these. Alternatively, spare bytes in other frame structures would be required, for example in the Optical Channel Overhead structure (defined in ITU G.872). A separate communications channel may alternatively be set up, for example on Optical Service Channel, for the specific purpose of carrying this data.

If a fault is detected in the node 4, the control device 72 determines (from a model of the network) the switch states required in other nodes for the particular channel on which the failure has been detected. This information is placed in the allocated bytes by sending write data Wr to the transmitting transponder 44b. Alternatively, only an indication that a fault has been detected, together with the source for the replacement protection data, needs to be transmitted over the network. The control devices in each node can then determine the appropriate change to the switch states. The write data Wr may of course need to be sent by a different route to the route on which the detected failure was recognised.

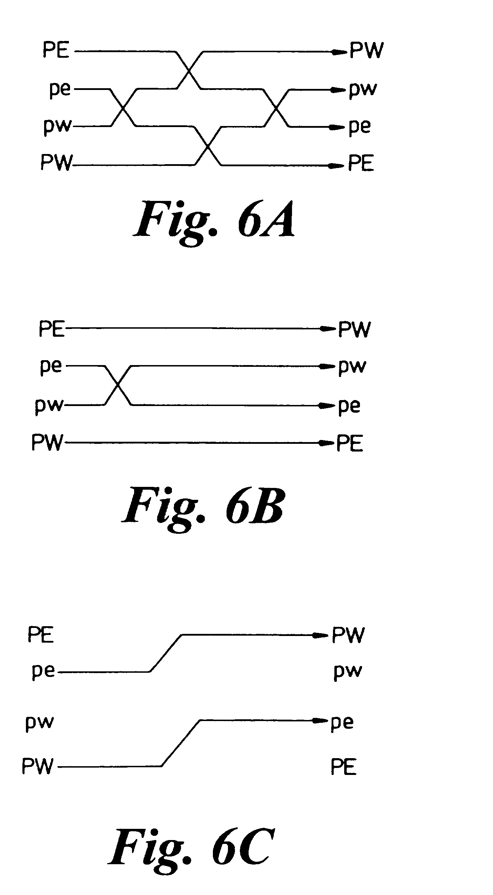

One possible structure for an individual switching network 700 is shown in Figure 5. As shown, the switching network controls the routing of signals between the protection cables PE, PW, and of the protection signals pe, pw to be supplied to or received from the external service platform 6. The individual switches 701 may comprise 2X2 waveguide switches, for example polymer on silicon switches.

The desired switching functions will be described with reference to Figure 6, and referring back to Figure 1.

During normal operation of the node, the protection signals pe to be directed to an eastward node are coupled to the east protection cable PE, and protection signals pw intended for nodes on the west side are coupled to the west protection cable PW. This functionality is achieved (with bidirectional traffic flow) by the switch states shown in Figure 6A. In the event of a main cable failure, as indicated at 12 in Figure 1, the protected traffic is already routed in the correct direction on the parallel protection cable 10. Thus, no change of switch state is required to implement a span switch.

If a ring switch is desired, following failure of both the main cable and the protection cable, as indicated at 12 and 14 in Figure 1, then alternative routing of the protection traffic is required. For example, taking the node 4d in Figure 1, traffic which was to be transmitted eastward (clockwise in the ring) must now be diverted in the opposite direction around the ring. Figure 6C illustrates the switch states which enable the protection traffic pe which was intended to be transmitted eastwardly (for example to node 4b via the repeater 4a) to be diverted in a westward direction around the protection cables 10d and 10c. In this case, node 4c must pass the protection traffic to enable communication between nodes 4d and 4a. For this purpose, the node 4c operates in a passing mode. the switch states for which are illustrated in Figure 6B. In this case, the protection traffic passes straight between the cables PE and PW. No additional protection traffic at the carrier frequencies concerned is allowed to enter at node 4c and the switch network effectively operates to reflect any incoming protection traffic on those particular carrier frequencies.

The node operation described above enables fault detection of individual channels to be detected. As one example, a fault may occur on an individual channel if the transceiver 22 for main protection traffic from the service platform 6 fails in respect of an individual carrier wavelength. The possibility of routing individual protection data channels using the individual switch network enables the network to take account of multiple channel failures at different points around the network, and enables alternative protection paths to be established simultaneously. This also provides a more efficient use of the bandwidth of the protection cables.

The particular design described with reference to Figure 3 has the advantage that the main signal traffic passing between the main cables MW and ME is unaffected by the operation of the switch matrix 70 so that the protection capability does not impact upon the normal performance of the system.

The positioning of the optical switch matrix between the service platform and the transponder provides optical protection benefits with simple power budgeting and set up. The transponders provide gain to make up the difference between their minimum input power and their defined output power. An optical switch network with losses may be positioned between two transponders and. as long as its loss does not exceed some value dictated by the transponders performance, it will have no influence on the available external power budget. Furthermore, the transponders isolate the associated optical switch network from the main optical cables.

Fault detection on a channel-by-channel basis also enables the service platforms 6 to provide different levels of protection for different channels.

Although the invention has been described in the context of a ring network structure, other connection patterns may take advantage of nodes operating according to the invention. Similarly, although bidirectional traffic flow is illustrated on each optical connection between components, it may instead be desirable to provide monodirectional optical connections. The data interface between the nodes and the service platform 6 may also take any suitable form.

## Claims

1. A network node for an optical communications network, the network node being arranged to provide optical protection signals to at least two protection paths to offer fault protection for a number of the channels of a wavelength division multiplexed working traffic signal supported by the node, comprising an optical switch array which couples individual protection channels to one or other of the protection paths and which is selectively reconfigurable to re-route individual protection channels to an alternative one of the protection paths in the event of a transmission fault.

2. A network node according to claim 1, comprising first and second working traffic ports coupled to respective transceivers which handle a number of different possible channels of the wavelength division multiplexed working traffic signal to be carried by the network, and first and second protection traffic ports coupled to respective protection transceivers which handle protection signals for at least some of the channels, the optical switch array being arranged to couple the protection signals between the protection transceivers and the first and second protection traffic ports, wherein the optical switch array is selectively reconfigurable to reroute protection signals to one of the first and second protection traffic ports on a channel by channel basis in the event of a detected transmission fault.

3. A network node according to claim 2, in which the optical switch array comprises a number of individual optical switch networks, one for each of the protection channels supported by the transceivers associated with the first and second protection traffic ports, wherein changing the switch state of an optical switch network changes the routing of the respective protection channel within the network node.

4. A network node according to claim 3, in which each of the first and second protection traffic ports is coupled to a multiplexer to multiplex optical signals output from the optical switch array for subsequent transmission and for demultiplexing optical signals received at the protection traffic port and coupling each of the individual channels to a respective optical switch network.

5. A network node according to claim 4, in which an optical transponder is provided in each of the tributary paths of the multiplexer to condition optical signals coupled between the protection traffic port and the respective optical switch network.

6. A network node according to claim 3, in which each of the first and second working traffic ports is coupled to a multiplexer for demultiplexing a wavelength division multiplexed working traffic signal received at the respective working traffic port into its constituent channels, wherein a transmission fault detector is associated with each of the demultiplexed channels for detecting failed reception on that channel.

7. A network node according to claim 6, further comprising a number of routing control circuits, each of which is coupled to a respective one of the optical switch networks, the routing control circuit receiving an output from a respective transmission fault detector in the event of a detected transmission fault on a particular protection channel to selectively reconfigure the associated optical switch network.

8. A network node according to claim 7, in which the transmission fault detectors are optical transponders.

9. A network node according to claim 8, in which each optical transponder is adapted to signal other nodes in the network when a transmission fault is detected to establish a protection path for the protection channel and detect fault signals generated by other nodes in the network. the optical transponder being configured to output an appropriate signal to the routing control circuit in dependence on the fault signal.

10. A network node according to claim 9, further comprising an add/drop multiplexer coupled between the first and second working traffic ports.

11. A wavelength division multiplexed optical communications network comprising at least two network nodes according to claim 1, adjacent network nodes being connected together by a main trunk cable for carrying working traffic and a protection cable for carrying protection traffic.

12. A method of routing protection traffic in a network node which is arranged to provide optical protection signals to at least two protection paths to offer fault protection for a number of the channels of a wavelength division multiplexed working traffic signal supported by the node, comprising the step of selectively reconfiguring an optical switch array in the event of a detected transmission fault to couple individual protection channels to one or other of the protection paths to reroute individual protection channels on a channel by channel basis.
